# FASCICULE DE BREVET EUROPEEN

(11) **EP 0 704 173 B1**
(45) Date de publication et mention de la délivrance du brevet: **03.06.1998**
(21) Numéro de dépôt: 95402153.1
(22) Date de dépôt: 26.09.1995
(51) Int. Cl.: A42B 3/04, G02B 27/01

(54) **Casque modulaire à montage rapide**
Schutzhelm aus Schnellmontagemodulen
Helmet with quick mounting modules

(30) Priorité: 30.09.1994 FR 9411735
(43) Date de publication de la demande: 03.04.1996
(73) Titulaire: SEXTANT AVIONIQUE, 92360 Meudon La Forêt (FR)
(72) Inventeur: Baudou, Joel, B.P. 329, F-92402 Courbevoie Cedex (FR); Capdepuy, Pascal René, B.P. 329, F-92402 Courbevoie Cedex (FR)
(74) Mandataire: Guérin, Michel

(56) Documents cités:
- EP-A- 0 290 293
- EP-A- 0 471 264
- WO-A-94/14349
- FR-A- 2 677 604
- GB-A- 2 254 160
- US-A- 3 548 411
- US-A- 5 226 181

## Description

L'invention se situe dans le domaine des casques équipés de moyens optiques de visualisation, par exemple les casques pour pilote d'avions militaires.

De tels casques comportent une coque destinée à la protection contre la perforation. La coque est équipée d'un habillage interne destiné à la protection de la tête du pilote contre les chocs. Ils comportent aussi un dispositif de visualisation. Ces dispositifs ont pour fonction de présenter au pilote des informations sous forme symbolique. Ces informations se superposent sous forme virtuelle au paysage extérieur. Lorsque ces informations représentent des éléments masqués ou non encore visibles du paysage extérieur elles doivent être présentées dans la direction réelle où elles se trouvent par rapport à un référentiel lié à la terre. Pour cette raison ou pour des raisons de netteté de l'image, les divers composants du dispositif de visualisation doivent garder entre eux et par rapport à l'oeil du pilote une position fixe.

Dans les casques actuels le dispositif de visualisation comporte des moyens de projection de l'image symbolique. La projection est effectuée sur un combineur qui renvoie l'image projetée vers l'oeil du pilote. Le dispositif de projection et de renvoi présente pour un bon confort une image collimatée. Le combineur est une surface partiellement réfléchissante laissant passer les rayons optiques en provenance du paysage extérieur et réfléchissant au moins partiellement l'image en provenance des moyens de projection. Le combineur est en général constitué par une partie d'une visière de protection- dont est équipé le casque.

La bonne position entre eux, et par rapport à l'oeil du pilote, des équipements optroniques de visualisation, est réalisée au cours d'une phase de personnalisation du casque. Cette phase comporte une adaptation de l'habillage du casque garantissant pour le futur porteur du casque une bonne position de l'image symbolique.

Il est connu que la coque du casque, sur laquelle sont fixés les équipements optroniques de visualisation se déforme sous l'action de diverses sollicitations. Il est connu également de monter les équipements optroniques sur des structures amovibles qui viennent s'ancrer sur des dispositifs d'ancrage prévus sur le casque. Un tel mode de montage est connu par exemple du brevet US A N° 4 156 292 du 29 mai 1979.

La présente invention vise elle aussi un casque capable de recevoir une structure amovible portant un équipement optronique. Elle vise de plus à permettre le remplacement par le porteur du casque lui-même de structures différemment équipées. Un même casque de protection adapté à la morphologie d'un porteur peut être équipé par exemple en fonction de la mission :
- d'un dispositif de visualisation de jour
- d'un dispositif de visualisation de nuit
- de jumelles de vision de nuit
- de visières écran de protection

Avec l'invention il devient possible pour un porteur, membre d'un équipage, pilote, navigateur, observateur, tireur, de changer lui-même en cabine son équipement en fonction de l'évolution de la mission ou des conditions extérieures. Le changement est rapide et ne nécessite aucun outillage.

A toutes ces fins, l'invention est relative à un casque comportant deux pièces principales, une coque ayant deux flancs latéraux reliés entre eux par des parties avant et arrière de la coque, et une structure rigide conformée pour recevoir des moyens optroniques, la structure rigide étant montable de façon amovible sur la coque à l'aide d'un ensemble de moyens de liaison, chaque moyen de liaison comportant des pièces de liaison constituées par un pion et un cylindre, l'une des pièces étant attachée à la coque, l'autre à la structure, chaque cylindre ayant une direction axiale caractérisée en ce que au moins une pièce de liaison de deux ensembles de liaison attachés à la structure est mobile par rapport à la structure et capable de deux positions, une position ouverte et une position fermée, dans la position ouverte les deux pièces de liaison mobiles permettent la mise en place de la structure sur la coque, dans la position fermée ces pièces assurent la liaison avec la coque par l'intermédiaire des pièces de liaison correspondantes de la coque, et en ce que la structure est équipée de moyens de maintien des pièces mobiles de liaison de la structure en position ouverte et en position fermée, le passage de la position ouverte à la position fermée étant obtenu par pression manuelle exercée sur une pièce comportant la pièce de liaison liée à la structure, la pression étant exercée pour chacune des pièces de chacun des deux ensembles sensiblement dans la direction axiale de chacun des cylindres.

De la sorte le porteur du casque peut lui-même en cabine saisir une structure rigide équipée de ses moyens optroniques, la mettre en position, actionner les pièces de liaison de la structure, une pièce avec chacune de ses mains, et les mettre dans la position fermée où elles coopèrent avec les pièces en regard de la coque pour lier la coque et la structure. Lorsque les pièces de liaison de la structure sont dans la position fermée, des moyens de verrouillage liés à la structure viennent maintenir cette position fermée. De même, pour séparer la structure rigide du casque, on actionne manuellement les pièces de verrouillage pour déverrouiller les pièces de liaison. Dans l'un des modes de réalisation, le renvoi des pièces de liaison en position ouverte est effectué grâce à un moyen élastique de renvoi. Le verrouillage des pièces de liaison en position fermée assure une liaison stable de la coque et de la structure. Le verrouillage des pièces de liaison en position ouverte permet la mise en place et le retrait de la structure du casque sans avoir à se soucier de la position des pièces de liaison attachées à la structure.

Dans le mode préféré de réalisation, chacun des ensembles de liaison permet un déplacement local selon une direction locale Δ de la coque par rapport à la structure. Cette direction locale est l'axe du cylindre local.

Le coulissement des pions dans les cylindres autorise un déplacement relatif local de la coque et de la structure porteuse des équipements optroniques, l'ensemble conservant une position relative constante. Les liaisons localement mobiles ont pour but de découpler totalement les fonctions de la coque du casque et de la structure rigide liée à la coque et supportant les moyens optroniques. De la sorte la coque est ramenée à son rôle premier qui est d'assurer une protection au pilote. Elle peut donc être allégée. De même la structure mécanique de support des moyens optroniques n'a plus à résister aux contraintes de déformation dues aux déformations du casque. Elle peut être allégée également. Il en résulte pour le pilote, une plus grande sécurité, un meilleur confort de port dû à l'allégement, et une plus grande facilité pour la mise en place et la dépose du casque.

De préférence, les ensembles de liaisons sont placés de façon à permettre les mouvements les plus usuels de la coque et de la structure porteuse. Ainsi selon le mode préféré de réalisation, l'équipement comporte un ensemble pion-cylindre dans chacun des flancs latéraux de la coque, un troisième ensemble pion-cylindre ayant son axe situé dans le plan de symétrie de la coque assurant le maintien latéral de l'ensemble coque-structure. De préférence cet ensemble est situé dans la partie supérieure de la coque, vers l'avant.

Le plan de symétrie du casque est, lorsque le casque est porté, le plan vertical de symétrie du corps humain. La mention du plan de symétrie n'est destinée qu'à localiser l'emplacement des troisièmes moyens de liaison.

De façon avantageuse, la coque et la structure sont chacune équipées de pièces de guidage de la structure vers sa position montée. Il pourra s'agir d'une pièce femelle sur l'une des pièces par exemple en forme d'entonnoir et d'une pièce mâle sur l'autre pièce par exemple en forme de cône, le mouvement d'avant en arrière de la structure amenant le cône au fond de l'entonnoir ou sur une butée.

Un exemple de réalisation d'un casque selon l'invention sera maintenant décrit en regard des dessins annexés dans lesquels :
- La figure 1 représente une coupe schématique d'un casque selon l'invention par un plan sécant à trois ensembles de liaison entre la coque et la structure ;
- La figure 2 représente une vue latérale en perspective d'une coque montrant un exemple de réalisation des pièces de liaison de la coque et de pièces de guidage ;
- La figure 3 représente une vue de face d'un mode de réalisation d'un bossage de la coque ;
- La figure 4 représente une vue en perspective éclatée d'un exemple d'une structure rigide comportant des pièces mobiles de liaison à une coque ;
- La figure 5 représente une vue en coupe d'un premier mode de réalisation d'un mécanisme lié à la structure et comportant une pièce de liaison mobile en rotation autour d'un axe. La coupe est effectuée perpendiculairement à l'axe de rotation selon un plan de symétrie de la pièce de liaison, celle-ci étant en position ouverte et en approche d'une pièce de liaison correspondante de la coque ;
- La figure 6 représente la même coupe que la figure 5, la pièce de liaison étant en position fermée et liée à la pièce de liaison correspondante de la coque ;
- La figure 7 est destinée à présenter un exemple de principe de fonctionnement d'une pièce de liaison qui dans un second mode de réalisation est mobile en translation par rapport à la structure ;
- La figure 8 est une vue en coupe de l'exemple représentée figure 7 ;
- La figure 9 est une vue schématique en position haute et en position basse d'un mécanisme lié à la structure rigide et autorisant la rotation de la structure par rapport à la coque entre une position haute et une position basse ;
- La figure 10 est une vue de ce même mécanisme montrant le sens de déplacement des pièces de commande et de fixation ;
- La figure 11 est une vue en perspective ouverte de ce même mécanisme faisant apparaître le mode de retrait d'une des pièces de fixation ;
- La figure 12 est une coupe longitudinale de ce même mécanisme faisant apparaître le mode de retrait du pion de maintien en position basse.

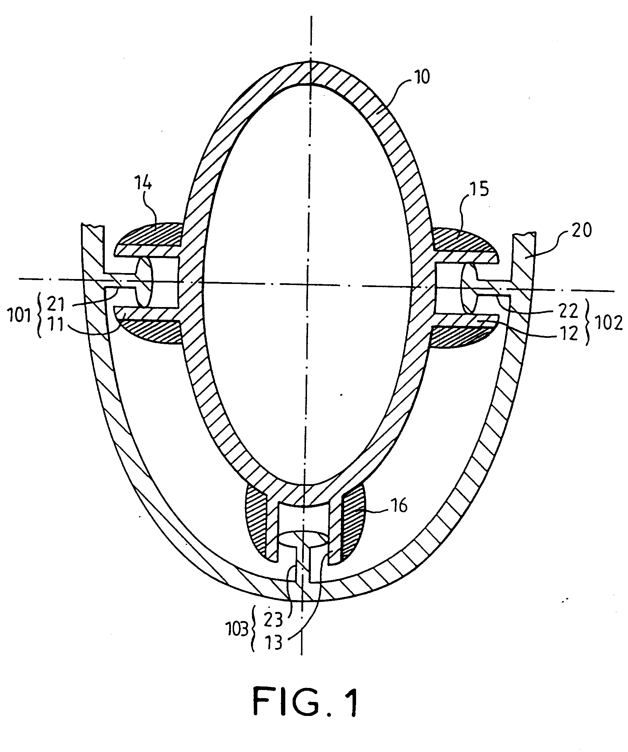

La figure 1 fait apparaître en coupe trois liaisons 101, 102, 103 entre une coque 10 et une structure porteuse d'équipements optroniques 20. Il s'agit sur cette figure de montrer le principe d'une liaison isostatique entre coque 10 et structure 20. C'est pourquoi la dimension des liaisons est plus importante que dans la réalité. Les liaisons comportent selon le mode préféré de réalisation trois cylindres 11, 12, 13 représentés figure 1 fixés sur la coque 10, et trois pions correspondants 21, 22, 23 représentés ici attachés à la structure 20. La coupe du casque est réalisée suivant un plan sécant aux trois liaisons. Avec ce mode de liaison, la coque 10 peut se déformer sans exercer de contrainte sur la structure 20. La déformation de la coque 10 par exemple pour la mise en place du casque entraîne des déplacements locaux des cylindres 11, 12, 13 le long des pions 21, 22, 23. Ces déplacements se font localement selon l'axe de chaque cylindre. Dans la réalisation selon le mode préféré, les cylindres 11 et 12 sont des alésages réalisés dans des bossages 14, 15 de la coque 10 rapportés sur le flancs de la coque 10. Le troisième cylindre 13 est alésé dans un bossage central 16 rapporté sur la partie supérieure avant de la coque. Ce bossage 16 est disposé symétriquement par rapport au plan de symétrie de la coque.

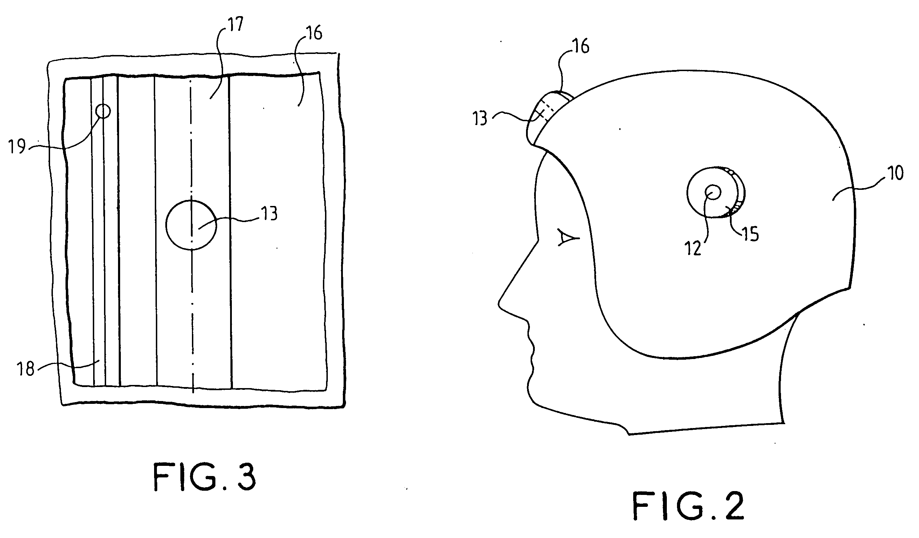

Une vue de côté en perspective de la coque 10 est représentée figure 2. Cette figure fait apparaître les bossages 16 et 15, les alésages 13 et 12 ainsi qu'une pièce de butée 9 dont il sera parlé plus loin.

Pour les besoins d'un mode de réalisation qui sera décrit plus loin dans lequel la structure rigide est mobile en rotation autour de deux ensembles de liaison disposés sur chacun des flancs de la coque, le bossage 16 comporte de préférence comme représenté sur une vue de face de ce bossage faisant l'objet de la figure 3 une rainure 17 longitudinale dans un plan de symétrie. Cette rainure guide la rotation du pion 23. De même dans ce mode de réalisation, le bossage comporte une glissière en V 18 creusée dans le bossage et parallèle à la rainure 17. Cette glissière guide la rotation d'un cliquet de maintien dans une position haute de la structure par introduction du cliquet dans un alésage 19.

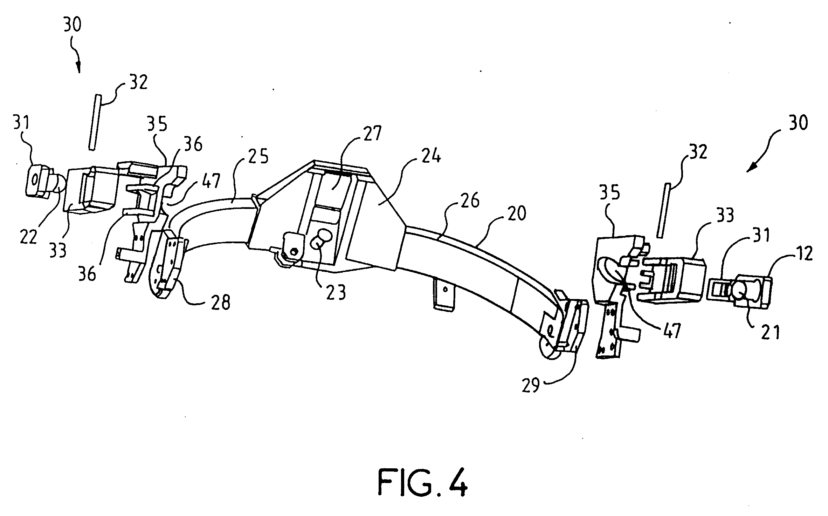

La figure 4 est une vue en perspective éclatée d'un exemple de réalisation d'une structure 20 conformée pour se monter sur la coque représentée figure 2. La structure 20 comporte une pièce centrale 24. Cette pièce centrale 24 porte deux bras latéraux 25, 26. Les pions de liaisons 23 et 22, 21 sont fixés comme suit : le pion 23 est vissé dans une forme rectangulaire creuse 27 dont les dimensions sont prévues pour contenir le bossage central 16 de la coque 10. Les pions latéraux 21, 22 font partie de mécanismes d'escamotage 30 composés de plusieurs pièces.

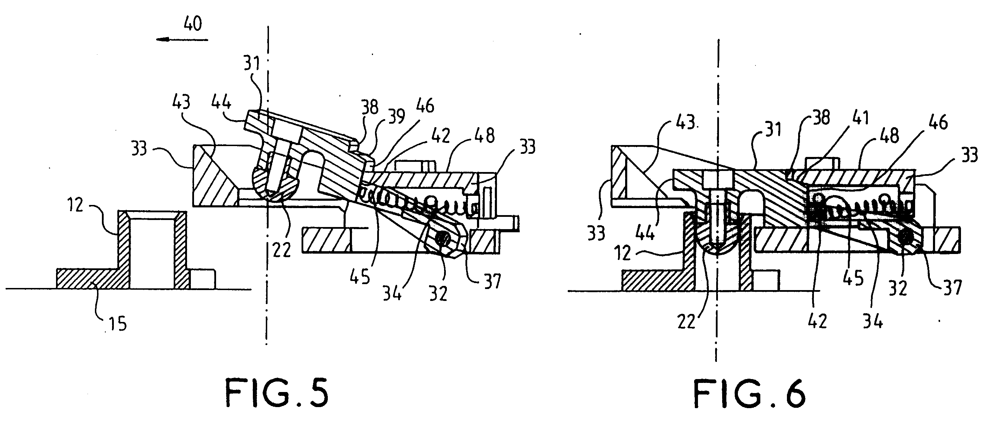

Chaque mécanisme 30 est fixé à une extrémité 28, 29 de chaque bras latéral. La structure 20 présente sensiblement une symétrie par rapport à un plan qui, en position portée de la structure, est le plan de symétrie du porteur. Chaque mécanisme d'escamotage 30 comporte un bras 31 articulé autour d'un axe 32. Chaque bras articulé supporte un pion latéral 21, 22. Le mécanisme comporte également un coulisseau 33, et un ressort de rappel 34 non représenté figure 4. L'ensemble du mécanisme d'escamotage 30 est fixé sur une platine 35 elle-même fixée à une extrémité 28, 29 du bras 25, 26. Outre des moyens de fixation aux extrémités 28, 29 représentés sur la figure 4 par des trous en vis à vis, sur les platines 35 et une extrémité 28, 29, la platine 35 est équipée de glissières 36 sur lesquelles glisse le coulisseau 33 et d'un alésage 37 (figure 5) recevant l'axe 32 autour duquel est mobile en rotation le bras 31.

Des vues détaillées en coupe d'un mécanisme d'escamotage 30 sont représentés figures 5 et 6. Les coupes sont représentées selon un plan perpendiculaire à l'axe 32 qui est plan de symétrie pour le bras 31 le coulisseau 33 et les glissières 36. La figure 5 représente un mécanisme d'escamotage 30 en position ouverte, à un moment où la structure 20 est près de sa position de montage. La figure 6 représente le mécanisme d'escamotage 30 en position fermée, le pion 22 en place dans le cylindre 12 de la coque 10. Le fonctionnement est le suivant. Lorsque guidé par des moyens de guidage dont il sera parlé en détail plus loin, le pion 22 arrive en face du cylindre 12, l'utilisateur pousse manuellement le bras articulé 31. Le bras pivote autour de l'axe 32, ce qui engage le pion 22 dans le cylindre 12. Le ressort 34 dont une extrémité est fixée au coulisseau 33 et l'autre extrémité au bras 31, tire le coulisseau 33 dans le sens représenté par une flèche 40. Une partie supérieure 48 du coulisseau 33 vient alors recouvrir une partie 38 du bras articulé 31 dans la position fermée. Des plans inclinés 39 sur le bras articulé et 41 sur la partie supérieure 48 facilitent le recouvrement du bras 31 par le coulisseau 33. Lorsque le pion 22 est en position fermée, les plans inclinés 39 du bras 31 et 41 sur la partie supérieure 48 du coulisseau sont au contact l'un de l'autre. Pour passer de la position fermée à la position ouverte, l'utilisateur tire le coulisseau dans la direction inverse de celle marquée par la flèche 40, l'action conjuguée du ressort 34 et d'un plan incliné 43 situé en avant du coulisseau 33 et qui vient s'engager sous une partie avant 44 du bras 31, provoque la rotation du bras 31 dans le sens inverse de celui qui provoque la fermeture, ce qui met le pion 22 en position ouverte. La remontée du bras est limitée par le fait qu'une partie 45 du bras 31 vient en butée contre le plan incliné 41 de la partie supérieure 48 du coulisseau 33. Le verrouillage en position ouverte est assuré par le fait que la partie avant dans le sens de la flèche 40 de la partie supérieure 48 n'est pas tout à fait perpendiculaire à la direction de coulissement ; cette partie avant vient sous l'action du ressort 34 s'encastrer dans une forme 42 en V ouvert du bras 31. Dans la forme de réalisation représentée figure 5 ou 6, c'est la même partie supérieure 48, du coulisseau 33 qui par son action assure le verrouillage du bras 31 en position ouverte ou fermée. Dans cette configuration, le V ouvert 42 formé par la surface supérieure 45 du bras qui vient au contact de la partie supérieure 48 et un plan 46 qui fait avec cette surface un angle aigu proche d'un angle droit, se situe plus bas et plus près de l'axe 32 que le plan incliné 39 de ce même bras. De plus le plan 46 fait avec le plan tangent à un cylindre ayant pour axe l'axe 32 et passant au voisinage de la surface 46 un angle faible. De la sorte, une pression exercée sur le bras 31, bénéficie d'un effet de levier par l'intermédiaire de ce plan pour repousser vers l'arrière le coulisseau 33. Ainsi le déverrouillage de la position ouverte du bras 31 est assuré par simple pression exercée par le porteur du casque sur le coulisseau 33.

Pour aider à la mise en place autonome, un guidage de la structure vers sa position montée est assurée d'une part par une glissière évasée latérale 47 (figure 4) non débouchante réalisée dans chacune des platines 35 de fixation du mécanisme d'escamotage 30. Chacun des bossages latéraux 15, 14 (figure 2) de la coque butte sur les parties haute et arrière de la glissière 47 lorsque la structure 20 est en position.

La mise en place et le retrait s'effectuent de la façon suivante. L'utilisateur prend naturellement à deux mains la structure 20 qui porte un module de visualisation non représenté et s'assure que les pions 21, 22 de liaison sont en position ouverte par une pression vers l'arrière sur les coulisseaux 33. La structure portant le module de visualisation est présentée par l'avant de façon naturelle comme pour la mise en place de lunettes de vue. Le préguidage de la structure 20 sur la coque 10 est assuré par l'engagement des bossages 14, 15 de la coque 10 dans les glissières non débouchantes 47 de la platine 35 fixée à la structure 20. Le positionnement précis des pions de liaison 21, 22 est réalisée d'une part par l'engagement du bossage central 16 de la coque 10 dans la forme rectangulaire creuse de la structure 20 et d'autre part, par l'arrivée en butée des bossages 14, 15 dans les glissières non débouchantes 47. Dans cette position, le pion central 23 est naturellement engagé dans l'alésage 13 du bossage avant 16. L'utilisateur peut alors engager les pions latéraux 21, 22 dans les alésages latéraux 11, 12 par pression sur les bras articulés 31, réalisant ainsi la liaison isostatique de la structure 20 et de la coque 10.

La dépose du module de visualisation s'effectue naturellement lors de sa préhension par l'utilisateur : une pression des pouces dans la direction de retrait sur les coulisseaux 33 provoque le dégagement des dispositif de liaison latéraux sous l'action des ressorts 34, le retrait vers l'avant du module de visualisation est alors possible.

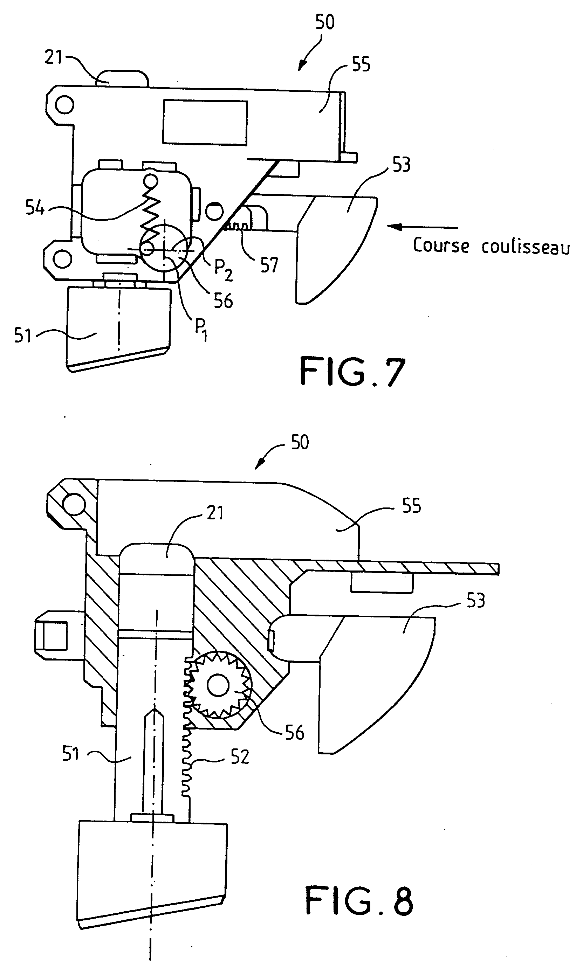

Un autre exemple de réalisation d'un mécanisme 50 d'escamotage sera donné en référence aux figures 7 et 8.

Ce mécanisme comporte un corps 55 assurant la liaison entre les pièces composant le mécanisme et chacune des extrémités 28, 29 latérales de la structure rigide 20. Le pion 21 se trouve à l'extrémité d'un poussoir 51. Sur la figure 7 le pion 21 est en position de liaison à la coque, sur la figure 8 il est en position ouverte. Ce poussoir comporte une crémaillère 52 qui entraîne en rotation une roue dentée 56. Un ressort 54 a une extrémité reliée au corps 55 et une autre à une face libre de la roue dentée 56. Le fonctionnement de cette première partie du mécanisme est le suivant. Lorsque le poussoir 51 est poussé à fond de telle sorte que le pion 21 est enfoncé dans l'alésage 11, la position de l'extrémité du ressort 54 liée à la roue dentée 56 est telle que le ressort 54 exerce un couple sur la roue dentée 56. Ce couple tend à faire tourner la roue dans le sens où elle exerce sur la crémaillère 52 une force qui pousse le pion 21 dans le fond de l'alésage 11. Lorsque le poussoir est tiré et que le pion 21 est hors de l'alésage 11, la même extrémité du ressort 54 est dans une position telle que le ressort 54 exerce sur la roue dentée 56 un couple qui tend à faire tourner cette roue dans le sens où elle exerce sur la crémaillère 52 une force qui tire le pion 21 vers l'extérieur de l'alésage 11. Si l'on considère un plan P₁ diamétral de la roue dentée 56, parallèle à la direction de déplacement du poussoir 51, le point d'application de la force du ressort doit se trouver d'un côté de ce plan lorsque le poussoir est enfoncé à fond en position fermée et de l'autre côté lorsque le poussoir est retiré à fond en position ouverte. Si l'on considère un plan diamétral P₂ de la roue dentée 56 perpendiculaire à la direction Δ de déplacement du poussoir, le point d'application sera de préférence dans le plan P₂ ou à son voisinage d'un côté ou de l'autre du plan P₁ selon que le pion 21 est en position ouverte ou fermée. C'est cette position d'attache qui offre dans les deux cas, pour un même ressort le couple de verrouillage le plus fort.

Dans le mode de réalisation ici décrit afin de conserver au mécanisme 50 la même ergonomie d'emploi que celle du mécanisme d'escamotage 30, il a été prévu un coulisseau 53. Ce coulisseau est dans une direction perpendiculaire à la direction Δ de déplacement du pion 21. Il est muni d'une crémaillère 57 qui entraîne et est entraînée par la même roue dentée 56. Dans une variante de réalisation, il pourra s'agir d'une roue dentée différente, cette roue dentée différente étant portée par le même axe que la roue 56 ou par un axe qui par un système d'engrenage est capable de provoquer le mouvement de la roue 56.

Les figures 7 et 8 représentent le mécanisme 50 selon des plans parallèles aux directions de déplacement du poussoir 51 et du coulisseau 53. Sur la figure 7, le poussoir 51 portant le pion 21 est en position fermée, ce qui correspond à la position sortie du coulisseau 53. Sur la figure 8, le poussoir 51 est en position ouverte et le coulisseau 53 est en position rentrée. Les moyens de fixation du corps 55 sur chacun des bras 28, 29 n'ont pas été représentés.

Le fonctionnement du mécanisme d'escamotage ainsi complété est le suivant : lorsque le poussoir 51 est en position fermée, le coulisseau 53 est en position arrière. La position ouverte du poussoir 51 est obtenue en poussant en avant le coulisseau 53. Ce mouvement par l'intermédiaire de la crémaillère 57 agissant sur la roue dentée 56 entraîne en retrait le poussoir 51. Ainsi du point de vue de l'utilisateur, que l'on utilise les mécanismes d'escamotage 30 ou 50, il n'y a rien de changé. Pour mettre les pions 21 en position fermée, il pousse sur le bras 31 ou le poussoir 51. Pour les mettre en position ouverte, il pousse sur le coulisseau 33 ou le coulisseau 53.

Un autre mode de réalisation de l'enclenchement du pion frontal 23 dans son alésage 13 sera maintenant décrit.

Le mode de fixation frontal décrit en rapport avec la figure 4 consistait en un pion 23 fixé au fond d'une cavité 27 de la structure rigide 20. Le pion ainsi réalisé crée un accrochage initial lors de la pose de la structure ou terminal lors de sa dépose. Il permet à l'utilisateur de lâcher la structure 20 pour porter ses mains vers chacun des deux mécanismes d'escamotage latéraux. Le mécanisme qui va être décrit permet non seulement cette action mais il permet aussi de fixer la structure rigide 20 selon deux positions, une position haute et une position basse. Lorsque la structure rigide 20 est montée sur la coque 10, le passage de l'une à l'autre de ces deux positions s'obtient par rotation de la structure autour d'un axe commun aux axes des pions et cylindres latéraux 21, 22 ; 11, 12 respectivement.

Dans la position basse, le pion 23 est engagé dans l'alésage frontal 13 du bossage 16. Dans la position haute, le pion 23 est dégagé du cylindre 13. Le maintien en position haute est assuré par l'engagement d'un cliquet dans un alésage du bossage frontal 16.

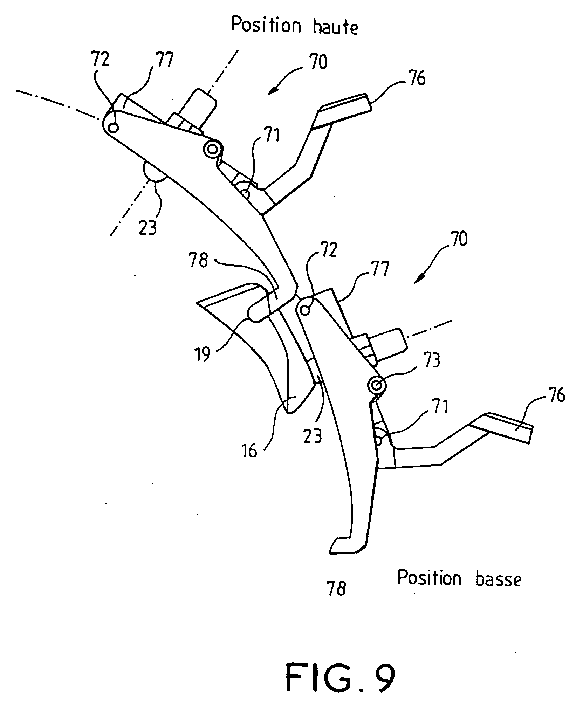

Un exemple de mécanisme permettant d'assurer une rotation de la structure autour des pions latéraux avec maintien dans une position basse ou haute sera maintenant décrit en liaison avec les figures 9 à 12.

La figure 9 est une vue schématique d'un mécanisme 70 lié à la structure 20 et autorisant la rotation de la structure autour des deux pions latéraux. La figure 9 représente d'une part le bossage 16 de la coque et d'autre part le mécanisme 70 selon deux positions une position basse et une position haute. Pour autoriser ce mouvement de rotation, le mécanisme 70 permet l'escamotage du pion 23 ou d'un cliquet 78 à la commande.

Le mécanisme 70 d'escamotage du pion central 23 comprend un levier de commande 76 articulé sur un corps 77 fixé sur la structure rigide 20 autour d'un axe 71 lié au corps 77. Un cliquet 78 articulé autour d'un axe 72 lié au corps 77 permet le maintien en position haute de la structure dans un alésage 19 du bossage 16. Le cliquet 78 et le pion 23 sont capables de deux positions. En l'absence d'action sur le levier 76, le pion 23 et le cliquet 78 sont en position de maintien de la structure. Cela signifie que si la structure est en position basse, le pion 23 est poussé vers la coque et peut engager l'alésage 13 du bossage 16. Si la structure est en position haute, le cliquet 78 est poussé vers la coque et peut engager l'alésage 19 du bossage 16. si une action est exercée sur le levier 76, le pion 23 et le cliquet 78 sont éloignés de la coque. Il devient alors possible de faire tourner le structure 20 autour des pions latéraux.

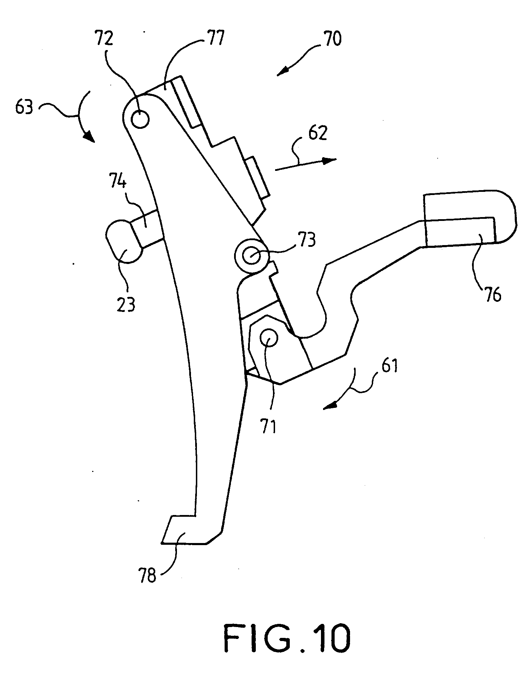

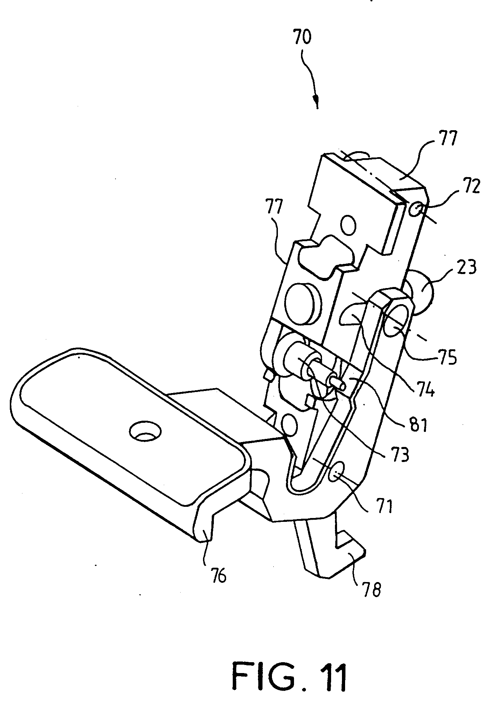

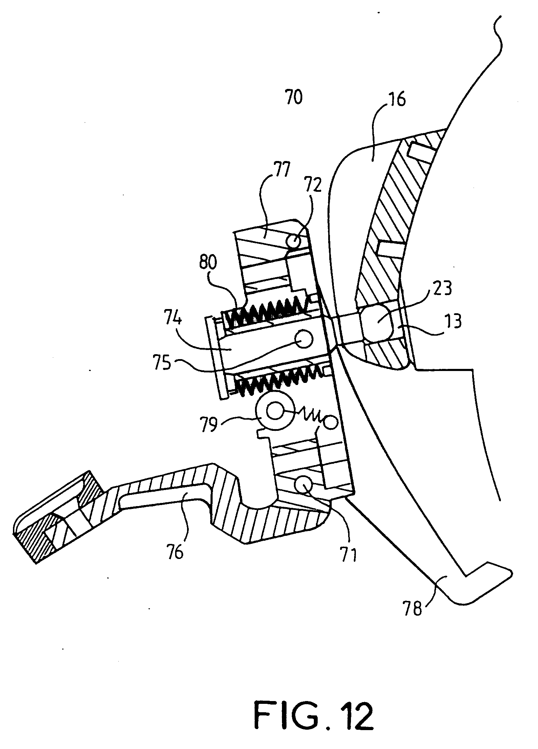

Sur la figure 10, on a représenté une vue de côté du mécanisme 70 seul. Sur cette figure, le pion 23 et le cliquet 78 sont dans la position qu'ils occupent en l'absence d'action sur le levier. Cette figure montre également des flèches 61, 62, 63 qui indiquent dans quel sens se meuvent le levier 76, le pion 23 et le cliquet 78. L'action sur le levier 76 provoque la rotation du cliquet autour de son axe de rotation 72 par déplacement d'un doigt 73 entraîné par le mouvement du levier 76. L'action sur le pion 23 résulte d'une action du levier 76 sur un axe 74 coulissant dans le corps 77, également par l'intermédiaire d'un doigt 75 qui apparaît figure 11 et 12. Des ressorts prenant appui d'une part sur le corps 77 et d'autre part sur le cliquet et l'axe 74 provoquent le retour à la position représentée figure 10 lorsque l'action sur le levier 76 a cessé. Il existe de nombreuses façons de provoquer un petit déplacement de pièces mobiles en translation ou rotation au moyen d'un levier lui-même mobile dans un corps. Le levier peut être muni de dents qui par le mouvement du levier se déplacent, un système de roues ou de secteurs dentés entraînant les pièces que l'on veut déplacer. Le mode de réalisation qui va être décrit en référence aux figures 11 et 12 n'est qu'un exemple de réalisation qui résulte d'un compromis prenant en compte des contraintes de poids et d'encombrement.

La figure 11 représente plus particulièrement le mode d'action du levier 76 sur le cliquet 78, la figure 12 représente plus particulièrement le mode d'action du levier 76 sur l'axe porte-pion 74. La figure 11 est une vue de face du mécanisme 70, le corps 77 ayant été coupé par des plans parallèles à l'axe 71 du levier 76. Cette vue est destinée à faire comprendre le mécanisme d'action du levier 76 sur le cliquet. Le levier 76 est muni d'une rampe 81 qui lorsque le levier tourne autour de l'axe 71 à partir de sa position de repos se déplace. Cette rampe pousse alors en avant l'extrémité du doigt 73. Ce doigt est fixé sur le cliquet 78. Son mouvement entraîne le cliquet en rotation autour de son axe 72. Afin de permettre le mouvement du doigt 73, le corps 77 est muni de fentes oblongues dont les extrémités servent de butoir aux mouvements de rappel en position de repos et en position de retrait du cliquet 78. Le mouvement du levier 76 entraîne également un mouvement vers l'avant d'un doigt 75 qui traverse l'axe porte-pion 74.

La figure 12 est une coupe du mécanisme 70 par un plan perpendiculaire à l'axe 71 du levier 76 et diamétral de l'axe 74 porte-pion. Le pion 23 a été représenté dans son logement 13 du bossage 16 de la coque. Le mouvement du levier 76 autour de l'axe 71 entraîne en translation le porte-pion 74 par l'intermédiaire du doigt 75. Lorsque l'action sur le levier a cessé, un ressort 80 appuyé d'une part au corps 77 et d'autre part à un épaulement du porte-pion 74 ramène le pion 23 en position de repos. Le cliquet 78 est ramené lui en position de repos par un ressort spiral 79.

## Revendications

1. Casque comportant deux pièces principales (10,20), une coque (10) ayant deux flancs latéraux reliés entre eux par des parties avant et arrière de la coque et une structure rigide (20) conformée pour recevoir des moyens optroniques, la structure rigide (20) étant montable de façon amovible sur la coque (10) à l'aide d'un ensemble de moyens de liaison (101,102,103), chaque moyen de liaison comportant des pièces de liaison constituées par un pion (21,22,23) et un cylindre (11,12,13), l'une des pièces de liaison étant attachée à la coque (10), l'autre à la structure (20) chaque cylindre (11,12,13) ayant une direction axiale caractérisée en ce que au moins une pièce de liaison de deux ensembles (101,102) de liaison attachés à la structure (20) est mobile par rapport à la structure (20) et capable de deux positions, une position ouverte et une position fermée, dans la position ouverte les deux pièces de liaison mobiles (21,22) permettent la mise en place de la structure sur la coque, dans la position fermée ces pièces (21,22) assurent la liaison avec la coque par l'intermédiaire des pièces de liaison correspondantes (11,12) de la coque (10), et en ce que la structure (20) est équipée de moyens de maintien des pièces mobiles (21,22) de liaison de la structure (20) en position ouverte et en position fermée, le passage de la position ouverte à la position fermée étant obtenu par pression manuelle exercée sur une pièce (31,51) comportant la pièce de liaison (21,22) liée à la structure, la pression étant exercée pour chacune des pièces (21,22) de chacun des deux ensembles (101,102) sensiblement dans la direction axiale de chacun des cylindres (11,12).

2. Casque selon la revendication 1 caractérisé en ce que le moyen de maintien en position ouverte comporte un moyen élastique (34,54) exerçant une force tendant à éloigner le pion (21,22) du cylindre (11,12) correspondant.

3. Casque selon la revendication 1 caractérisé en ce que les pièces de liaison mobiles (21,22) par rapport à la structure comprennent deux pièces qui sont en correspondance avec des pièces (11,12) de liaison de la coque montée sur chacun des flancs latéraux de la coque (10).

4. Casque selon la revendication 2 caractérisé en ce qu'une pièce de liaison mobile (21,22) de la structure est mobile par le fait qu'elle est montée sur un bras (31) mobile en rotation autour d'un axe (32) fixe par rapport à la structure (20).

5. Casque selon la revendication 2 caractérisé en ce qu'une pièce de liaison mobile (21,22) de la structure est mobile par le fait qu'elle est portée par un poussoir mobile (51) en translation par rapport à la structure (20).

6. Casque selon la revendication 4 caractérisé en ce que le bras (31) comporte deux surfaces (38,45) d'appui, une première (45) et une seconde (38), et une butée d'appui (46) et en ce que le moyen élastique (34) est relié d'une part au bras (31) et d'autre part à un coulisseau (33) capable de coulisser dans une direction sécante aux directions axiales du cylindre et de l'axe de rotation (32) du bras (31), dans la position ouverte le coulisseau (33) appuie sur la première surface (45) d'appui et est en butée sur la butée (46) du bras (31), dans la position fermée le coulisseau (33) est en appui sur la seconde surface d'appui (38), le mouvement du coulisseau de la première à la seconde position étant obtenu par effacement de la butée (46) lors de la poussée manuelle sur le bras (31) et action du moyen élastique (34) sur le coulisseau (33).

7. Casque selon la revendication 5 caractérisé en ce que le poussoir (51) comporte une crémaillère (52) entraînant une première roue dentée (56) tournant autour d'un axe le moyen élastique (54) étant relié d'une part à la roue dentée (56) et d'autre part à un point fixe par rapport à la structure (20), le point d'application du moyen élastique (54) sur la roue dentée (56) étant tel que dans la position fermée le moyen (54) exerce sur la roue dentée (56) un couple tendant à la rotation de la roue (56) entraînant la crémaillère (52) dans le sens de la fermeture et que dans la position ouverte le couple est exercé dans le sens de l'ouverture.

8. Casque selon la revendication 7 caractérisé en ce que une roue dentée (56) entraînée par le mouvement de la première, entraîne en translation selon une direction différente de la direction axiale du cylindre un coulisseau (53) muni d'une crémaillère (57), le coulisseau (53) étant dans une position sortie lorsque le poussoir (51) est en position fermée, le mouvement d'ouverture du poussoir résultant d'une poussée manuelle sur le coulisseau (53) pour le mettre dans une position rentrée.

9. Casque selon l'une des revendications 1 à 8 caractérisé en ce que la structure 20 et la coque (10) sont équipées de pièces de guidage (35,47,27,14,15,16) du mouvement de la structure (20) vers sa position montée sur la coque (10) les pièces de guidage étant constituées par des bossages(14,15,16) sur l'une des deux pièces principales (10,20) et des ouvertures (47,27) sur l'autre pièce (10, 20), ces ouvertures allant en s'évasant vers une partie large, les bossages étant destinée à être présentée face à la partie large de l'ouverture lors d'un mouvement d'avant en arrière de la structure (20) vers la coque (10).

10. Casque selon la revendication 1 caractérisé en ce que les pièces de liaison liée à la structure comprennent deux pièces mobiles (21,22) destinées à se lier à des pièces (11,12) située sur les flancs de la coque (10) et une pièce fixe (23) émergeant d'une cavité (27) de la structure.

11. Casque selon la revendication 1 caractérisé en ce que les pièces de liaison comprennent trois pièces mobiles (21,22,23) destinées à se lier à des pièces (11,12) situées sur les flancs de la coque et à une pièce (13) située en avant de la coque (10).

12. Casque selon l'une des revendications 10 ou 11 caractérisé en ce que l'une au moins des pièces mobiles (21,22) est mobile par le fait qu'elle est montée sur un bras (31) mobile en rotation autour d'un axe (32) fixe par rapport à la structure (20).

13. Casque selon l'une des revendications 10 ou 11 caractérisé en ce que l'une au moins des pièces mobiles est mobile par le fait qu'elle est portée par un poussoir (51) mobile en translation par rapport à la structure (20).

14. Casque selon la revendication 11 caractérisé en ce que la pièce mobile (23) de la structure (20) destinée à se lier à la pièce de liaison (13) située sur la partie avant de la coque (10) est capable de deux positions, une position de repos correspondant à la position fermée de ladite pièce (23) et une position de manoeuvre correspondant à la position ouverte de cette pièce (23) et en ce que le passage de la position fermée à la position ouverte est obtenu par action manuelle sur un levier de commande (76).

15. Casque selon la revendication 14 caractérisé en ce que la structure (20) en position montée sur la coque (10) est mobile en rotation autour des pièces de liaison latérales (21,22) et capable de deux positions d'arrêt une position basse dans laquelle la pièce de liaison (23) est engagée dans la pièce de liaison correspondante de la partie avant de la coque et une position haute dans laquelle un cliquet (78) lié à la structure mobile est maintenu par un moyen (19) lié à la coque (10).

16. Casque selon la revendication 15 caractérisé en ce que le cliquet (78) est capable de deux positions, une première et une seconde, dans la première position le cliquet peut être maintenu par le moyen de maintien (19) du cliquet (78) lié à la coque (10) du casque et une seconde où ce cliquet ne peut être maintenu par ce moyen de maintien, le passage de la première à la seconde position du cliquet étant obtenu par action sur le même levier (76) que celui servant au changement de position de la pièce (23) assurant la liaison à la coque (10) en position basse.

## Claims

1. Helmet comprising two main parts (10, 20) - a shell (10) having two side panels joined together by front and rear parts of the shell, and a rigid structure (20) shaped to receive optronic means - the rigid structure (20) being mountable removably on the shell (10) by means of a set of attachments (101, 102, 103), each attachment comprising attachment pieces that consist of a stud (21, 22, 23) and a cylinder (11, 12, 13), one of the attachment pieces being attached to the shell (10) and the other to the structure (20), each cylinder (11, 12, 13) having an axial direction, characterized in that at least one attachment piece of two sets (101, 102) of attachments attached to the structure (20) can move with respect to the structure (20) and can adopt two positions - an open position and a closed position; in the open position the two moving attachment pieces (21, 22) allow the structure to be fitted to the shell; in the closed position these pieces (21, 22) provide attachment to the shell by means of the corresponding attachment pieces (11, 12) of the shell (10), and in that the structure (20) is equipped with means for keeping the moving attachment pieces (21, 22) of the structure (20) in the open position and in the closed position, the change from the open position to the closed position being obtained by pressing manually on a piece (31, 51) comprising the attachment piece (21, 22) attached to the structure, the pressure being exerted on each of the pieces (21, 22) of each of the two sets (101, 102) more or less in the axial direction of each of the cylinders (11, 12).

2. Helmet according to Claim 1, characterized in that the means for maintaining the open position comprises an elastic means (34, 54) exerting a force that tends to move the stud (21, 22) away from the corresponding cylinder (11, 12).

3. Helmet according to Claim 1, characterized in that the attachment pieces (21, 22) that can move with respect to the structure comprise two pieces which face the attachment pieces (11, 12) of the shell mounted on each of the side panels of the shell (10).

4. Helmet according to Claim 2, characterized in that one moving attachment piece (21, 22) of the structure can move because it is mounted on an arm (31) that can rotate about a pin (32) but is stationary with respect to the structure (20).

5. Helmet according to Claim 2, characterized in that one moving attachment piece (21, 22) of the structure can move because it is borne by a push-button (51) that can move in translation with respect to the structure (20).

6. Helmet according to Claim 4, characterized in that the arm (31) has two bearing surfaces (38, 45) - a first one (45) and a second one (38) - and a bearing stop (46), and in that the elastic means (34) is connected on the one hand to the arm (31) and on the other hand to a slide (33) that can slide in a direction which is secant to the axial directions of the cylinder and of the pivot pin (32) of the arm (31); in the open position, the slide (33) bears on the first bearing surface (45) and is in abutment with the stop (46) of the arm (31); in the closed position, the slide (33) bears on the second bearing surface (38), the movement of the slide from the first to the second position being obtained by the stop (46) moving out of the way when manual pressure is applied to the arm (31) and the elastic means (34) acts on the slide (33).

7. Helmet according to Claim 5, characterized in that the push-button (51) comprises a rack (52) driving a first pinion (56) that rotates about an axis, the elastic means (54) being connected on the one hand to the pinion (56) and on the other hand to a point that is stationary with respect to the structure (20), the point of application of the elastic means (54) on the pinion (56) being such that in the closed position, the means (54) exerts on the pinion (56) a torque that tends to rotate the pinion (56) driving the rack (52) in the direction of closing, and so that in the open position, the torque is exerted in the direction of opening.

8. Helmet according to Claim 7, characterized in that a pinion (56) driven by the movement of the first one drives in translation, in a direction other than the axial direction of the cylinder, a slide (53) fitted with a rack (57), the slide (53) being in a deployed position when the push-button (51) is in the closed position, the opening movement of the push-button resulting from manual pressure on the slide (53) to place it in a retracted position.

9. Helmet according to one of Claims 1 to 8, characterized in that the structure (20) and the shell (10) are equipped with guide pieces (35, 47, 27, 14, 15, 16) that guide the movement of the structure (20) into its position in which it is mounted on the shell (10), the guide pieces consisting of bosses (14, 15, 16) on one of the two main parts (10, 20) and openings (47, 27) on the other part (10, 20), these openings widening towards a broad part, the bosses being intended to be offered up facing the broad part of the opening as the structure (20) is moved backwards towards the shell (10).

10. Helmet according to Claim 1, characterized in that the attachment pieces attached to the structure comprise two moving pieces (21, 22) intended to be attached to the pieces (11, 12) situated on the side panels of the shell (10) and a stationary piece (23) emerging from a cavity (27) in the structure.

11. Helmet according to Claim 1, characterized in that the attachment pieces comprise three moving pieces (21, 22, 23) intended to be attached to the pieces (11, 12) situated on the side panels of the shell and to a piece (13) situated at the front of the shell (10).

12. Helmet according to one of Claims 10 or 11, characterized in that at least one of the moving pieces (21, 22) can move because it is mounted on an arm (31) that can rotate about a pin (32) that is stationary with respect to the structure (20).

13. Helmet according to one of Claims 10 or 11, characterized in that at least one of the moving pieces can move because it is borne by a push-button (51) that can move in translation with respect to the structure (20).

14. Helmet according to Claim 11, characterized in that the moving piece (23) of the structure (20) intended to be attached to the attachment piece (13) situated on the front part of the shell (10) can adopt two positions - a position of rest that corresponds to the closed position of the said piece (23), and an operating position that corresponds to the open position of this piece (23) - and in that the change from the closed position to the open position is obtained by a manual action on a control lever (76).

15. Helmet according to Claim 14, characterized in that the structure (20) in its position mounted on the shell (10) can be rotated about the lateral attachment pieces (21, 22) and can adopt two stopped positions - a lowered position in which the attachment piece (23) is engaged in the corresponding attachment piece of the front part of the shell, and a raised position in which a catch (78) attached to the moving structure is held by a means (19) attached to the shell (10).

16. Helmet according to Claim 15, characterized in that the catch (78) can adopt two positions - a first position and a second position - in the first position the catch can be held by the means (19) of holding the catch (78) which is attached to the shell (10) of the helmet and a second position in which this catch cannot be held by this holding means, the change from the first to the second position of the catch being obtained by action on the same lever (76) as was used to change the position of the piece (23) that provides attachments to the shell (10) in the lowered position.

## Patentansprüche

1. Helm mit zwei Hauptteilen (10, 20), nämlich einer Schale (10), die zwei Seitenflanken aufweist, die miteinander durch vordere und hintere Abschnitte der Schale verbunden sind, und einer starren Struktur (20), die zur Aufnahme von optoelektronischen Mitteln ausgebildet ist, wobei die starre Struktur (20) an der Schale (10) abnehmbar mittels einer Baugruppe von Verbindungsmitteln (101, 102, 103) angebracht ist, wobei jedes Verbindungsmittel Verbindungsteile enthält, die durch ein mit einem Kopf versehenes Teil (21, 22, 23) und einen Zylinder (11, 12, 13) gebildet ist, wobei eines der Verbindungsteile an der Schale (10) und das andere an der Struktur (20) befestigt ist, wobei jeder Zylinder (11, 12, 13) axial ausgerichtet ist, dadurch gekennzeichnet, daß wenigstens ein Verbindungsteil der beiden an der Struktur (20) befestigten Verbindungs-Baugruppen (101, 102) bezüglich der Struktur (20) bewegbar ist und zwei Stellungen einnehmen kann, nämlich eine geöffnete Stellung und eine geschlossene Stellung, wobei die beiden beweglichen Verbindungsteile (21, 22) in der geöffneten Stellung das Anbringen der Struktur an der Schale ermöglichen und diese Teile (21, 22) in der geschlossenen Stellung die Verbindung mit der Schale mittels entsprechender Verbindungsteile (11, 12) der Schale (10) gewährleisten, und daß die Struktur (20) mit Mitteln zum Halten der beweglichen Verbindungsteile (21, 22) der Struktur (20) in der geöffneten Stellung und der geschlossenen Stellung versehen ist, wobei der Übergang von der geöffneten Stellung in die geschlossene Stellung durch einen manuell auf ein Teil (31, 51) ausgeübten Druck erhalten wird, das das mit der Struktur verbundene Verbindungsteil (21, 22) enthält, wobei der Druck für jedes der Teile (21, 22) jeder der beiden Baugruppen (101, 102) im wesentlichen in der axialen Richtung jedes der Zylinder (11, 12) ausgeübt wird.

2. Helm nach Anspruch 1, dadurch gekennzeichnet, daß das Mittel zum Halten in der geöffneten Stellung ein elastisches Mittel (34, 54) enthält, das eine Kraft ausübt, die das mit einem Kopf versehene Teil (21, 22) vom entsprechenden Zylinder (11, 12) zu entfernen sucht.

3. Helm nach Anspruch 1, dadurch gekennzeichnet, daß die bezüglich der Struktur bewegbaren Verbindungsteile (21, 22) zwei Teile enthalten, die mit Verbindungsteilen (11, 12) der Schale korrespondieren, die jeweils an den Seitenflanken der Schale (10) angebracht sind.

4. Helm nach Anspruch 2, dadurch gekennzeichnet, daß ein bewegliches Verbindungsteil (21, 22) der Struktur deshalb beweglich ist, weil es an einem Arm (31) angebracht ist, der um eine bezüglich der Struktur (20) feststehende Achse (32) gedreht werden kann.

5. Helm nach Anspruch 2, dadurch gekennzeichnet, daß ein bewegliches Verbindungsteil (21, 22) der Struktur deshalb bewegbar ist, weil es von einem bezüglich der Struktur (20) translationsbewegbaren Stößel (51) getragen wird.

6. Helm nach Anspruch 4, dadurch gekennzeichnet, daß der Arm (31) zwei Anlageflächen (38, 45) aufweist, nämlich eine erste Anlagefläche (45) und eine zweite Anlagefläche (38), sowie einen Anschlag (46), und daß das elastische Mittel (34) zum einen mit dem Arm (31) und zum anderen mit einem Schieber (33) verbunden ist, der in einer bezüglich den axialen Richtungen des Zylinders und der Rotationsachse (32) des Armes (31) eine Sekante bildenden Richtung verschiebbar ist, wobei der Schieber (31) in der geöffneten Stellung an der ersten Anlagefläche (45) anliegt und sich am Anschlag (46) des Armes (31) abstützt und in der geschlossenen Stellung an der zweiten Anlagefläche (38) anliegt, wobei die Bewegung des Schiebers von der ersten in die zweite Stellung durch Wegbewegen des Anschlags (46) beim manuellen Drücken auf den Arm (31) und durch Einwirken des elastischen Mittels (34) auf den Schieber (33) erhalten wird.

7. Helm nach Anspruch 5, dadurch gekennzeichnet, daß der Stößel (51) eine Zahnstange (52) aufweist, die ein erstes, sich um eine Achse drehendes Zahnrad (56) antreibt, wobei das elastische Mittel (54) einerseits mit dem Zahnrad (56) und andererseits mit einer bezüglich der Struktur (20) feststehenden Stelle verbunden ist, wobei der Angriffspunkt des elastischen Mittels (54) am Zahnrad (56) derart ist, daß das Mittel (54) in der geschlossenen Stellung auf das Zahnrad (56) ein Moment ausübt, das das die Zahnstange (52) mitnehmende Rad (56) in der Richtung des Schließens zu drehen sucht, und daß das Moment in der geöffneten Stellung in der Richtung des Öffnens ausgeübt wird.

8. Helm nach Anspruch 7, dadurch gekennzeichnet, daß ein von der Drehung des ersten Zahnrads angetriebenes Zahnrad (56) einen mit einer Zahnstange (57) versehenen Schieber (53) in einer sich von der axialen Richtung des Zylinders unterscheidenden Richtung translatorisch verstellt, wobei der Schieber (53) sich in einer hervorstehenden Stellung befindet, wenn sich der Stößel (51) in der geschlossenen Stellung befindet, wobei die Öffnungsbewegung des Stößels aus einem manuellen Schub auf den Schieber (53), um diesen in eine eingedrückte Stellung zu bringen, resultiert.

9. Helm nach eine der Ansprüche 1 bis 8, dadurch gekennzeichnet, daß die Struktur (20) und die Schale (10) mit Teilen (35, 47, 27, 14, 15, 16) zum Führen der Bewegung der Struktur (20) in ihre an der Schale (10) angebrachte Stellung versehen sind, wobei die Führungsteile durch Vorsprünge (14, 15, 16) an einem der beiden Hauptteile (10, 20) und Öffnungen (47, 27) an dem anderen Teil (10, 20) gebildet sind, wobei sich die Öffnungen zu einem breiten Abschnitt hin erweitern, wobei die Vorsprünge dafür vorgesehen sind, bei einer Bewegung der Struktur (20) von vorne nach hinten zur Schale (10) gegenüber dem breiten Abschnitt der Öffnung angeboten zu werden.

10. Helm nach Anspruch 1, dadurch gekennzeichnet, daß die mit der Struktur verbundenen Verbindungsteile zwei bewegliche Teile (21, 22) enthalten, die dafür vorgesehen sind, sich mit Teilen (11, 12) zu verbinden, die an den Flanken der Schale (10) angeordnet sind, und ein feststehendes Teil (23), das aus einem Hohlraum (27) der Struktur hervorsteht.

11. Helm nach Anspruch 1, dadurch gekennzeichnet, daß die Verbindungsteile drei bewegliche Teile (21, 22, 23) enthalten, die dafür vorgesehen sind, sich mit Teilen (11, 12) zu verbinden, die an den Flanken der Schale angeordnet sind, sowie mit einem Teil (13), das am vorderen Abschnitt der Schale (10) angeordnet ist.

12. Helm nach einem der Ansprüche 10 und 11, dadurch gekennzeichnet, daß wenigstens eines der beweglichen Teile (21, 22) deshalb beweglich ist, weil es an einem Arm (31) angebracht ist, der um eine bezüglich der Struktur (20) feststehende Achse (32) drehbar ist.

13. Helm nach einem der Ansprüche 10 und 11, dadurch gekennzeichnet, daß wenigstens eines der beweglichen Teile deshalb bewegbar ist, weil es von einem Stößel (51) getragen wird, der bezüglich der Struktur (20) translationsbewegbar ist.

14. Helm nach Anspruch 11, dadurch gekennzeichnet, daß das bewegliche Teil (23) der Struktur (20), das dafür vorgesehen ist, sich mit dem am vorderen Abschnitt der Schale (10) angeordneten Verbindungsteil (13) zu verbinden, zwei Stellungen einnehmen kann, nämlich eine Ruhestellung, die der geschlossenen Stellung des Teils (23) entspricht, und einer Betätigungsstellung, die der geöffneten Stellung dieses Teils (23) entspricht, und daß der Übergang von der geschlossenen Stellung in die geöffnete Stellung durch manuelles Einwirken auf einen Steuerhebel (76) erhalten wird.

15. Helm nach Anspruch 14, dadurch gekennzeichnet, daß die Struktur (20) in der an der Schale (10) angebrachten Stellung um seitliche Verbindungsteile (21, 22) drehbar ist und zwei feste Stellungen einnehmen kann, nämlich eine untere Stellung, in der das Verbindungsteil (23) in das entsprechende Verbindungsteil des vorderen Abschnittes der Schale eingreift, und eine obere Stellung, in der ein mit der beweglichen Struktur verbundener Haken (78) von einem mit der Schale (10) verbundenen Mittel (19) gehalten wird.

16. Helm nach Anspruch 15, dadurch gekennzeichnet, daß der Haken (78) zwei Stellungen einnehmen kann, nämlich eine erste und eine zweite Stellung, wobei der Haken in der ersten Stellung von dem mit der Schale (10) des Helms verbundenen Haltemittel (19) des Hakens (78) gehalten werden kann und wobei der Haken in der zweiten Stellung von diesem Haltemittel nicht gehalten werden kann, wobei der Übergang des Hakens von der ersten in die zweite Stellung durch Einwirken auf denselben Hebel (76) erhalten wird, der zum Ändern der Stellung des Teils (23) dient, das die Verbindung mit der Schale (10) in der unteren Stellung gewährleistet.
